# EUROPÄISCHE PATENTSCHRIFT

(11) **EP 2 771 164 B1**
(45) Veröffentlichungstag und Bekanntmachung des Hinweises auf die Patenterteilung: **03.02.2016**
(21) Anmeldenummer: 12787395.8
(22) Anmeldetag: 26.10.2012
(51) Int. Cl.: B29B 13/02, B29C 51/14, B29L 9/00, B29K 101/12, B29C 45/14, B29C 37/00, B29C 45/00

(54) **VERFAHREN ZUM HERSTELLEN VON KUNSTSTOFF-FORMTEILEN**
PROCESS FOR PRODUCING PLASTIC MOLDED PIECES
PROCEDE DE FABRICATION DE PIECES MOULEES EN MATIERE PLASTIQUE

(30) Priorität: 29.10.2011 DE 102011117338
(43) Veröffentlichungstag der Anmeldung: 03.09.2014
(73) Patentinhaber: KraussMaffei Technologies GmbH, 80997 München (DE)
(72) Erfinder: WIDMAYER, Stephan, 80997 München (DE); GÖTZE, Christian, 5512 Wohlenschwil (CH)
(74) Vertreter: Wilhelm, Ludwig
(86) Internationale Anmeldenummer: PCT/EP2012/071203
(87) Internationale Veröffentlichungsnummer: WO 2013/060811

(56) Entgegenhaltungen:
- EP-A1- 2 119 544
- DE-A1-102004 060 009
- GB-A- 2 094 701
- US-A- 4 936 936
- US-A1- 2011 027 534
- US-B1- 6 440 546

## Beschreibung

Die Erfindung betrifft ein Verfahren zum Herstellen von Kunststoff-Formteilen, aufweisend wenigstens ein umgeformtes Organoblech, das mit Kunststoff umspritzt ist, insbesondere mit thermoplastischem Kunststoff.

Die DE 20 2006 019 341 U1 beschreibt ein Organoblechstrukturbauteil mit einem Struktur versteifenden Kunststoffeinleger, der mit einem thermoplastischen Material derart hinterspritzt bzw. zumindest teilweise umspritzt ist, dass der Kunststoffeinleger und das thermoplastische Material eine stoffschlüssige Verbindung miteinander bilden. Das Organoblechstrukturbauteil wird durch Hinterspritzen bzw. Umspritzen einer Verstärkungsmaterial enthaltenden Kunststoffplatte mit einem thermoplastischen Material derart hergestellt, dass ein Stoffschluss zwischen Kunststoffplatte und thermoplastischem Material durch Einstellen einer geeigneten Temperatur und/oder eines geeigneten Drucks erzielt wird. Aus der DE102004060009A1 ist es bekannt, das Organoblech in einem Ofen zu erhitzen, bevor es in ein Formwerkzeug eingelegt wird.

Aufgabe der Erfindung ist es, ein verbessertes Verfahren zum Herstellen von Kunststoff-Formteilen, aufweisend wenigstens ein umgeformtes Organoblech, das mit insbesondere thermoplastischem Kunststoff umspritzt ist, zu schaffen.

Die Aufgabe wird gelöst durch ein Verfahren zum Herstellen von Kunststoff-Formteilen, insbesondere aufweisend wenigstens ein umgeformtes Organoblech, das mit thermoplastischem Kunststoff umspritzt ist, mit den Schritten des Bereitstellens eines Organoblechs, des Bereitstellens eines Ofens zum Erhitzen eines in den Ofen eingelegten Organoblechs, des Einbringens einer Antihaftlage in den Ofen, des Einbringens des bereitgestellten Organoblechs in den Ofen, des Erhitzens des Organoblechs mit Kontakt zu der Antihaftlage auf eine Umformtemperatur, sowie des Entnehmens des erhitzten Organoblechs aus dem Ofen und Überführen des erhitzten Organoblechs in ein Formwerkzeug zum Umformen und Umspritzen des Organoblechs.

Organobleche sind keine eigentlichen Bleche, die metallische Werkstoffplatten enthalten. Als Organobleche werden vielmehr Verbundplatten bezeichnet, die faserverstärkte, insbesondere endlosfaserverstärkte Strukturen enthalten, die in ein thermoplastisches Polymer eingelagert sind. Organobleche können insbesondere plattenförmige Halbzeuge sein, die ein mit einer Polymermatrix imprägniertes faserverstärktes, insbesondere endlosfaserverstärktes Gewebe aufweisen. Die Gewebe können dabei definierte Orientierungen ihrer Fasern vorgeben, die in der Polymermatrix bzw. dem thermoplastischen Polymer eingelagert sind. Die Fasern des Gewebes können beispielsweise Glasfasern, Kohlefasern, Kevlarfasern, Aramidfasern und/oder Naturfasern sein. Die Gewebe können aus sortenreinen Fasern oder aus Kombinationen verschiedener Faserarten bestehen. Als Polymermatrix eignen sich generell alle thermoplastischen Kunststoffe, wie beispielsweise Polyamid (PA) oder glasfaserverstärktes Polyamid (PA-GF). Als endlosfaserverstärkt können Strukturen bzw. Gewebe bezeichnet werden, deren Fasern unterbrechungsfrei von einem Ende des Organoblechs bis zu einem anderen Ende des Organoblechs laufen.

Organobleche werden üblicher Weise als vorgefertigte Halbzeuge in Form von Verbundplatten in Art von ebenen Blechen in unterschiedlichen Zuschnittsgrößen zur Verfügung gestellt. Im Rahmen eines erfindungsgemäßen Verfahrens zum Herstellen von Kunststoff-Formteilen werden die ebenen Organobleche umgeformt. Ein Umformen erfolgt dabei in einem erwärmten Zustand des Organoblechs, in dem die Polymermatrix bzw. das thermoplastische Polymer aufgrund der Temperaturerhöhung weicher wird. Um derartige Organobleche für das Umformen anweichen zu können, werden die kalten, d.h. harten Organobleche in einem Ofen auf eine spezifische Umformtemperatur des jeweiligen Organoblechs erhitzt. Der Ofen kann vorgeheizt sein._Die tatsächliche Umformtemperatur ist dabei u. a. von den Werkstoffkomponenten und der Struktur des Organoblechs abhängig.

Im Rahmen eines erfindungsgemäßen Verfahrens werden die erhitzten Organobleche aus dem Ofen entnommen und beispielsweise zum Umformen und Umspritzen in eine Kunststoffspritzgießmaschine transferiert. Bei einer Entnahme des erhitzten Organoblechs beispielsweise von einem Trägerrost oder einer Aufhängung im Ofen, würde das Organoblech wegen seines weichen Zustands aufgrund der Erhitzung im Ofen ohne eine erfindungsgemäße Antihaftlage an den unmittelbaren Berührstellen von Organoblech und Trägerrost oder Aufhängung an dem Trägerrost oder der Aufhängung kleben bleiben bzw. bei der Entnahme würde das Organoblech Fäden ziehen, d.h. erweichtes Material der Oberfläche des Organoblechs würde an dem Trägerrost oder der Aufhängung kleben bleiben und sich von dem Organoblech trennen. Neben einer Verunreinigung des Ofens und/oder einer Handhabungsvorrichtung bzw. der Kunststoffspritzgießmaschine kann es nachteilig sein, wenn die Oberfläche des Organoblechs verändert bzw. zerstört würde.

Erfindungsgemäß ist deshalb ein Einbringen einer Antihaftlage in den Ofen, ein Einbringen des bereitgestellten Organoblechs in den Ofen, und ein Erhitzen des auf der erfindungsgemäßen Antihaftlage aufliegenden Organoblechs auf eine Umformtemperatur vorgesehen. Die Antihaftlage kann ein stapelbarer Bogen oder eine kontinuierliche, insbesondere von einer Rolle abgewickelte Bahn sein. Die Antihaftlage kann eine Trägerschicht aus Papier, Metall oder Kunststoff aufweisen. Alternativ oder ergänzend kann die Antihaftlage eine textile Trägerschicht aufweisen. Die Antihaftlage kann auch aus einem Hybridwerkstoff gebildet werden. Beispielsweise kann die Antihaftlage aus einem Kunststoff mit integriertem Glasfasergewebe gebildet werden._Die Antihaftlage kann ein Gewebe sein. Die Trägerschicht kann selbst Antihafteigenschaften aufweisen. Alternativ kann die Trägerschicht mit einem Antihaftmaterial imprägniert oder beschichtet sein. Die Antihaftlage kann zur Einmalverwendung oder zur Mehrfachverwendung ausgebildet sein. Erfindungsgemäß kann die Antihaftlage von dem Organoblech, dem Trägerrost oder der Aufhängung bzw. der Handhabungsvorrichtung oder aus der Kunststoffspritzgießmaschine wieder entfernt werden. Die Antihaftlage wird insbesondere durch eine feste, dünne Auflage gebildet, die keine flüssig auf den Trägerrost aufgetragene Beschichtung ist. Die Antihaftlage kann jedoch eine spätere Oberflächenschicht des herzustellenden Kunststoff-Formteils bilden.

Ein Einbringen der Antihaftlage in den Ofen kann vor einem Einbringen des bereitgestellten Organoblechs in den Ofen erfolgen. Insbesondere im Falle, dass das Organoblech bereits mit einer Antihaftlage versehen ist, kann ein Einbringen der Antihaftlage in den Ofen gleichzeitig zu einem Einbringen des bereitgestellten Organoblechs in den Ofen erfolgen. Gegebenfalls kann ein Einbringen der Antihaftlage in den Ofen auch noch nach einem Einbringen des bereitgestellten Organoblechs in den Ofen erfolgen.

Die Antihaftlage kann jegliche dem Fachmann an sich bekannte Antihaftwerkstoffe aufweisen. Beispielsweise kann als Antihaftmaterial eine PTFE-Folie, eine PolyimidFolie und/oder ein Trägergewebe, insbesondere ein grobmaschiges Trägergewebe zur Anwendung kommen. Dabei kann das Trägergewebe mit PTFE ausgestattet sein.

In einer Ausführungsform kann die Antihaftlage vor dem Einbringen des bereitgestellten Organoblechs als separate Antihaftlage in den Ofen eingebracht und das Organoblech anschließend auf die Antihaftlage aufgelegt werden. Dazu kann beispielsweise ein bereitgehaltener Bogen einer Antihaftlage auf einen Trägerrost des Ofens aufgelegt werden. Die Antihaftlage kann manuell aufgelegt oder automatisiert zuführt werden. Ein automatisiertes Zuführen kann beispielsweise durch ein Abwickeln eines Abschnitts einer Trägerbahn von einem Wickel erfolgen, wobei die Trägerbahn die Antihaftlage aufweist. Nachdem die Antihaftlage auf dem Trägerrost des Ofens aufgelegt ist, wird das zu erhitzende Organoblech auf die Antihaftlage aufgelegt und anschließend das Organoblech im Ofen erhitzt.

Ein Entnehmen des erhitzten Organoblechs aus dem Ofen kann entweder mit oder ohne der Antihaftlage erfolgen.

In einer alternativen Ausführungsform kann das Organoblech mit einer auf seine Oberfläche aufgebrachten Antihaftlage bereitgestellt und das Organoblech zusammen mit der aufgebrachten Antihaftlage gemeinsam in den Ofen eingebracht werden. Die Antihaftlage ist in dieser Ausführungsform also bereits auf einer Oberfläche des Organoblechs fixiert bzw. befestigt. Ein Organoblech kann an seinen beiden Oberflächen mit einer Antihaftlage versehen sein. Wenn das Organoblech bereits vor einem Einbringen in den Ofen mit einer Antihaftlage versehen ist, kann ein separates Einlegen einer Antihaftlage in den Ofen entfallen. Das Organoblech wird also zusammen mit der Antihaftlage, d.h. gleichzeitig mit der Antihaftlage in den Ofen eingebracht.
In allen Ausführungen kann das erhitzte Organoblech unter Belassen der Antihaftlage in dem Ofen aus dem Ofen entnommen werden. Nachdem das Organoblech im Ofen erhitzt worden ist, kann während einer Entnahme des Organoblechs aus dem Ofen gleichzeitig oder unmittelbar zuvor das Organoblech von der Antihaftlage entfernt werden. Dazu kann beispielsweise ein manuell in den Ofen eingelegter Bogen einer Antihaftlage an einem Trägerrost des Ofens derart befestigt sein, dass bei einer Entnahme des Organoblechs von dem Trägerrost sich die Antihaftlage von dem Organoblech löst und die Antihaftlage fest mit dem Trägerrost verbunden bleibt. Die verbliebene Antihaftlage kann dann beispielsweise für ein weiteres im Ofen zu erhitzendes Organoblech wieder verwendet werden. Alternativ oder ergänzend kann die benutzte Antihaftlage separat, insbesondere manuell wieder aus dem Ofen entnommen werden, beispielsweise indem die benutzte Antihaftlage manuell vom Trägerrost entfernt wird.

Alternativ kann das erhitzte Organoblech zusammen mit der Antihaftlage aus dem Ofen entnommen werden. Wird die Antihaftlage zusammen mit dem Organoblech aus dem Ofen entnommen, so kann ein separates, insbesondere späteres oder manuelles Entfernen der Antihaftlage aus dem Ofen entfallen. Wird die Antihaftlage zusammen mit dem Organoblech aus dem Ofen entnommen, so kann außerdem die Antihaftlage dazu genutzt werden, ein Zusammenkleben des Organoblechs mit einem Handhabungsgerät bzw. dessen Endeffektor, d.h. Greifer zu verhindern, während oder nachdem das Organoblech mittels des Handhabungsgeräts in ein Formwerkzeug einer Spritzgießmaschine transferiert wird.

Die Antihaftlage kann insbesondere vor, während oder nach einem Überführen des Organoblechs in das Formwerkzeug und vor einem Umformen des Organoblechs von dem Organoblech entfernt werden. Die Antihaftlage kann also zusammen mit dem Organoblech entnommen werden, wobei die Antihaftlage außerhalb des Ofens wieder entfernt wird. Dies ist beispielsweise dann sinnvoll, wenn das Organoblech ohne Vorhandensein einer Antihaftlage umgeformt und/oder umspritzt werden soll. Mit anderen Worten soll in diesen Fällen die Antihaftlage nicht in dem Formwerkzeug verbleiben.

Alternativ kann die Antihaftlage während eines Umformens des Organoblechs in dem Formwerkzeug verbleiben und nach dem Umformen des Organoblechs und vor einem Umspritzen des Organoblechs von dem Organoblech entfernt werden. Die Antihaftlage kann in dem Formwerkzeug seine Funktion erfüllen. So kann die Antihaftlage beispielsweise verhindern, dass das Organoblech an einer Oberfläche des Formwerkzeugs in unerwünschter Weise haften bleibt. So kann während eines Umformprozesses in dem Formwerkzeug eine Verschiebung der Oberflächen von Organoblech zu der Oberfläche des Formwerkzeugs erwünscht oder sogar erforderlich sein. Die erfindungsgemäße Antihaftlage kann diese gewünschte Verschiebung zulassen oder sogar fördern. Soll die Antihaftlage während des Umspritzens nicht mit umspritzt werden, so kann die Antihaftlage vor dem Umspritzen des umgeformten Organoblechs entfernt werden.

In einer anderen Ausführung kann die Antihaftlage während eines Umformens und Umspritzens des Organoblechs in dem Formwerkzeug verbleiben und nach dem Umformen und Umspritzen von dem Organoblech entfernt werden. So kann beispielsweise die Antihaftlage auf einer Oberfläche des Organoblechs auch während des Umspritzvorgangs verbleiben, die nicht für das Umspritzen verwendet wird, d.h. die nicht mit Kunststoffmaterial angespritzt wird.

In einer weiteren Ausführung kann die Antihaftlage während eines Umformens und Umspritzens des Organoblechs in dem Formwerkzeug verbleiben und bei einer Entnahme des Organoblechs aus dem Formwerkzeug zusammen mit dem Organoblech entnommen werden und insbesondere als zusätzliche Oberflächenschicht auf dem Organoblech verbleiben.

In einer weiterführenden Ausführung kann die Antihaftlage mit einer Trägerbahn verbunden in den Ofen eingebracht werden und das erhitzte Organoblech nach einem Lösen der Antihaftlage von der Trägerbahn zusammen mit der Antihaftlage aus dem Ofen entnommen werden. Die Antihaftlage kann dabei zunächst auf einer Trägerbahn fixiert sein oder die Antihaftlage wird durch einen Abschnitt der Trägerbahn gebildet. Um die Antihaftlage zusammen mit dem Organoblech aus dem Ofen zu entnehmen, kann die Antihaftlage dadurch von der Trägerbahn gelöst werden, dass das Organoblech aus dem Ofen herausgezogen wird, wobei die Antihaftlage mit dem Organoblech verbunden bleibt und sich von der Trägerbahn löst bzw. von dieser abreißt.

In einer solchen Ausführung kann die Antihaftlage von einem Abschnitt der Trägerbahn, insbesondere von einem mittels einer Perforation von der Trägerbahn konturdefiniert abtrennbaren Abschnitt gebildet werden. Mittels einer Perforation wird eine bevorzugte Abreißkante vorgegeben, entlang der sich die Antihaftlage von der Trägerbahn abtrennt, wenn das Organoblech aus dem Ofen entnommen wird.

In allen Ausführungsformen kann die Antihaftlage und/oder eine Trägerbahn, welche die Antihaftlage aufweist, von einem Einzelbogen gebildet werden, der in den Ofen eingelegt wird. Die Antihaftlage kann dadurch beispielsweise vor dem Einbringen des bereitgestellten Organoblechs als separater Einzelbogen in den Ofen eingebracht und das Organoblech anschließend auf den Einzelbogen aufgelegt werden. Dazu kann beispielsweise ein bereitgehaltener Einzelbogen der Antihaftlage auf einen Trägerrost des Ofens aufgelegt werden. Die Antihaftlage kann manuell aufgelegt oder automatisiert zuführt werden. Nachdem der Einzelbogen auf dem Trägerrost des Ofens aufgelegt ist, wird das zu erhitzende Organoblech auf den Einzelbogen aufgelegt und anschließend das Organoblech im Ofen erhitzt.

In allen Ausführungsformen kann alternativ die Antihaftlage und/oder eine Trägerbahn, welche die Antihaftlage aufweist, von einem Abschnitt einer Endlosbahn gebildet werden, der insbesondere von einem Wickel abgewickelt und in eine im Ofen angeordnete Auflegeposition gefördert wird. Die Antihaftlage kann somit kontinuierlich, insbesondere als eine von einer Rolle oder einem Wickel abgewickelte Bahn in den Ofen, insbesondere auf den Trägerrost des Ofens zugeführt werden. Die Rolle bzw. der Wickel, welcher die Trägerbahn mit den Antihaftlagen aufweist, kann vollständig innerhalb des Ofens bereitgehalten werden oder von außerhalb des Ofens abschnittsweise in den Ofen hineingefördert werden. Ein automatisiertes Zuführen kann somit durch ein Abwickeln eines Abschnitts einer Trägerbahn von einem Wickel erfolgen, wobei die Trägerbahn die Antihaftlage aufweist.

Generell kann die Antihaftlage einseitig oder beidseitig des Organoblechs angelegt werden.

Außerdem kann darüber hinaus in allen Ausführungsformen zusätzlich ein Aufbringen einer weiteren Antihaftlage auf wenigstens einen Oberflächenabschnitt des Formwerkzeugs oder eines das Organoblech handhabenden Greifers, insbesondere eines Greifers eines automatisierten Handhabungsgerätes erfolgen.

Ein Ausführungsbeispiel der Erfindung ist exemplarisch in den beigefügten schematischen Figuren dargestellt. Es zeigen:
- Fig. 1: schematische Darstellungen eines Ofens, einer erfindungsgemäßen Antihaftlage mit einem aufgelegten Organoblech, ein Handhabungsgerät und eine Spritzgießmaschine als Komponenten zum Durchführen eines erfindungsgemäßen Verfahrens;
- Fig. 2: eine perspektivische Darstellung einer Vorrichtung mit einem Wickel, von dem ein Abschnitt einer Endlosbahn die Antihaftlage und/oder eine Trägerbahn, welche die Antihaftlage aufweist, bildet.

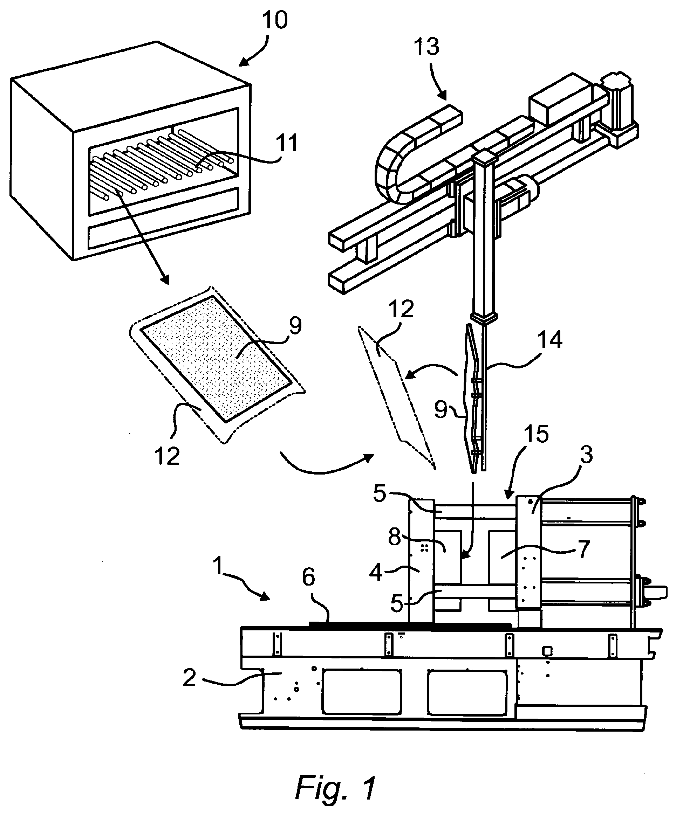

In der Figur 1 ist eine beispielhafte Spritzgießmaschine 1 dargestellt. Die Spritzgießmaschine 1 weist ein Maschinenbett 2 auf. Auf dem Maschinenbett 2 ist eine feststehende Formaufspannplatte 3 befestigt und eine bewegliche Formaufspannplatte 4 linear verschieblich gelagert. Zur ihrer linear verschieblichen Lagerung ist die bewegliche Formaufspannplatte 4 entlang von vier Horizontalsäulen 5 verschiebbar gelagert. Die bewegliche Formaufspannplatte 4 kann beispielsweise durch nicht näher dargestellte hydraulische Antriebe entlang der Längserstreckung der vier Horizontalsäulen 5 bewegt werden. Die bewegliche Formaufspannplatte 4 ist durch Linearführungen 6 horizontal beweglich auf dem Maschinenbett 2 gelagert. An der feststehenden Formaufspannplatte 3 ist eine erste Spritzgießformhälfte 7 befestigt. An der beweglichen Formaufspannplatte 4 ist eine zweite Spritzgießformhälfte 8 befestigt. Die beiden Spritzgießformhälften 7 und 8 sind im vorliegenden Ausführungsbeispiel ausgebildet, ein Organoblech 9 umformen und mit thermoplastischem Kunststoff umspritzen zu können. Das Organoblech 9 kann beispielsweise ein plattenförmiges Organoblech 9 sein.

Gemäß einer beispielhaften Ausführung eines erfindungsgemäßen Verfahrens zum Herstellen von Kunststoff-Formteilen wird, wie in Fig. 1 schematisch dargestellt, in einem ersten Schritt ein Ofen 10 bereitgestellt. Der Ofen 10 ist eingerichtet, ein in den Ofen 10 eingelegtes Organoblech 9 zu erhitzen. Der Ofen 10 kann vorgeheizt sein. Der Ofen 10 weist im gezeigten Ausführungsbeispiel dazu einen Trägerrost 11 auf. Es wird außerdem nicht nur das Organoblech 9 bereitgestellt, sondern auch eine erfindungsgemäße Antihaftlage 12 dadurch bereitgestellt, dass die Antihaftlage 12 zunächst in den Ofen 10 eingebracht wird, indem die Antihaftlage 12 auf den Trägerrost 11 aufgelegt wird. Anschließend wird im vorliegenden Ausführungsbeispiel das bereitgestellte Organoblech 9 auf die Antihaftlage 12 aufgelegt und im Ofen 10 erhitzt. Nachdem das Organoblech 9 seine Umformtemperatur erreicht hat, wird in einem nächsten Schritt das Organoblech 9, im gezeigten Ausführungsbeispiel zusammen mit der Antihaftlage 12, mittels eines Handhabungsgerätes 13 aus dem Ofen 10 entnommen. Dazu kann das Handhabungsgerät 13 beispielsweise einen Nadelgreifer 14 aufweisen, welcher ausgebildet ist, das Organoblech 9 zu halten. Mit dem Handhabungsgerät 13 kann das Organoblech 9 außerdem in ein Formwerkzeug 15 der Spritzgießmaschine 1 zum Umformen und Umspritzen des Organoblechs 9 überführt werden. Das Formwerkzeug 15 wird im gezeigten Ausführungsbeispiel von den beiden Spritzgießformhälften 7 und 8 gebildet.

In diesem Ausführungsbeispiel wird die Antihaftlage 12 vor dem Einbringen des bereitgestellten Organoblechs 9 als separate Antihaftlage 12 in den Ofen 10 eingebracht und das Organoblech 9 anschließend auf die Antihaftlage 12 aufgelegt. Dabei wird die Antihaftlage 12 von einem Einzelbogen gebildet, der in den Ofen 10 eingelegt wird. Im gezeigten Ausführungsbeispiel wird die Antihaftlage 12 nur einseitig des Organoblechs 9 angelegt.

Das erhitzte Organoblech 9 wird zusammen mit der Antihaftlage 12 aus dem Ofen 10 entnommen. Die Antihaftlage 12 wird dann während des Überführens des Organoblechs 9 an das Formwerkzeug noch vor einem Umformen des Organoblechs 9 von dem Organoblech 9, wie schematisch gezeigt, entfernt.

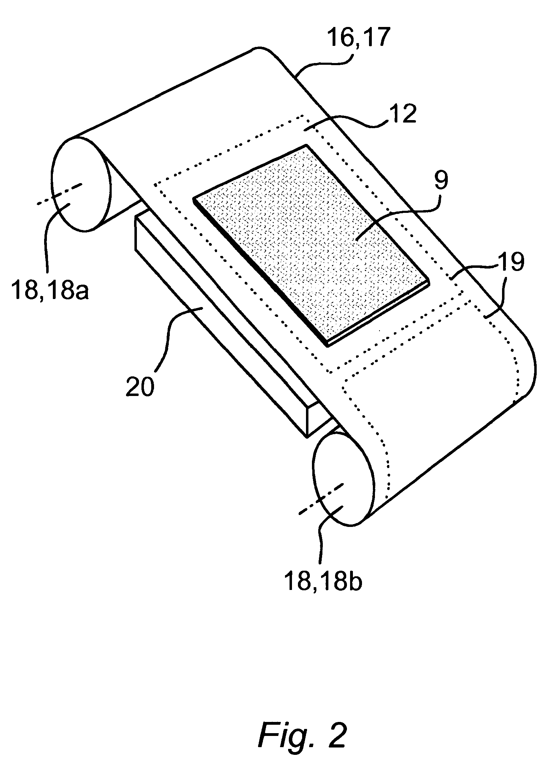

In der Fig. 2 ist in einer beispielhaften Ausführungsform dargestellt, wie eine Trägerbahn 16, welche die Antihaftlage 12 aufweist, von einem Abschnitt einer Endlosbahn 17 gebildet wird, der von einem Wickel 18 abgewickelt und in eine im Ofen 10 angeordnete Auflegeposition gefördert werden kann. Die Antihaftlage 12 kann so mit der Trägerbahn 16 verbunden in den Ofen 10 eingebracht werden und das erhitzte Organoblech 9 nach einem Lösen der Antihaftlage 12 von der Trägerbahn 16 zusammen mit der Antihaftlage 12 aus dem Ofen 10 entnommen werden. In einer solchen Ausführung ist die Antihaftlage 12 beispielsweise mittels einer Perforation 19 von der Trägerbahn 16 konturdefiniert abtrennbar.

Die Vorrichtung kann einen ersten Wickel 18a aufweisen, auf dem eine Anzahl von Antihaftlagen 12 nacheinander auf der Trägerbahn 16 aufgereiht vorgehalten sind. Die Trägerbahn 16 ist auf dem Wickel 18a aufgewickelt. Von diesem Wickel 18a läuft ein Abschnitt der Endlosbahn 17 über eine Auflage 20 hinweg zu einem zweiten Wickel 18b, auf den die verbrauchte Trägerbahn 16 wieder aufgewickelt wird. Die Auflage 20 kann beispielsweise auch durch den Trägerrost 11 des Ofens 10 gebildet werden. Die gesamte Vorrichtung oder aber nur Teile der Vorrichtung können innerhalb des Ofens 10 angeordnet sein.

### Bezugszeichenliste

- 1: Spritzgießmaschine
- 2: Maschinenbett
- 3: feststehende Formaufspannplatte
- 4: bewegliche Formaufspannplatte
- 5: Horizontalsäulen
- 6: Linearführungen
- 7: erste Spritzgießformhälfte
- 8: zweite Spritzgießformhälfte
- 9: Organoblech
- 10: Ofen
- 11: Trägerrost
- 12: Antihaftlage
- 13: Handhabungsgerät
- 14: Nadelgreifer
- 15: Formwerkzeug
- 16: Trägerbahn
- 17: Endlosbahn
- 18,18a,18b: Wickel
- 19: Perforation
- 20: Auflage

## Patentansprüche

1. Verfahren zum Herstellen von Kunststoff-Formteilen, insbesondere aufweisend wenigstens ein umgeformtes Organoblech (9), das mit thermoplastischem Kunststoff umspritzt ist, mit den Schritten:
- Bereitstellen eines Organoblechs (9);
- Bereitstellen eines Ofens (10) zum Erhitzen eines in den Ofen (10) eingelegten Organoblechs (9);
- Einbringen einer Antihaftlage (12) in den Ofen (10);
- Einbringen des bereitgestellten Organoblechs (9) in den Ofen (10);
- Erhitzen des Organoblechs (9) mit Kontakt zu der Antihaftlage (12) auf eine Umformtemperatur;
- Entnehmen des erhitzten Organoblechs (9) aus dem Ofen (10) und Überführen des erhitzten Organoblechs (9) in ein Formwerkzeug (15, 7, 8);
- Umformen und Umspritzen des Organoblechs (9) in dem Formwerkzeug (15, 7, 8).

2. Verfahren nach Anspruch 1,
**dadurch gekennzeichnet, dass** die Antihaftlage (12) vor dem Einbringen des bereitgestellten Organoblechs (9) als separate Antihaftlage (12) in den Ofen (10) eingebracht und das Organoblech (9) anschließend auf die Antihaftlage (12) aufgelegt wird.

3. Verfahren nach Anspruch 1,
**dadurch gekennzeichnet, dass** das Organoblech (9) mit einer auf seine Oberfläche aufgebrachten Antihaftlage (12) bereitgestellt und das Organoblech (9) zusammen mit der aufgebrachten Antihaftlage (12) gemeinsam in den Ofen (10) eingebracht wird.

4. Verfahren nach einem der Ansprüche 1 bis 3,
**dadurch gekennzeichnet, dass** das erhitzte Organoblech (9) unter Belassen der Antihaftlage (12) in dem Ofen (10) aus dem Ofen (10) entnommen wird.

5. Verfahren nach einem der Ansprüche 1 bis 3,
**dadurch gekennzeichnet, dass** das erhitzte Organoblech (9) zusammen mit der Antihaftlage (12) aus dem Ofen (10) entnommen wird.

6. Verfahren nach Anspruch 5,
**dadurch gekennzeichnet, dass** die Antihaftlage (12) vor, während oder nach einem Überführen des Organoblechs (9) in das Formwerkzeug (15, 7, 8) und vor einem Umformen des Organoblechs (9) von dem Organoblech (9) entfernt wird.

7. Verfahren nach Anspruch 5,
**dadurch gekennzeichnet, dass** die Antihaftlage (12) während eines Umformens des Organoblechs (9) in dem Formwerkzeug (15, 7, 8) verbleibt und nach dem Umformen des Organoblechs (9) und vor einem Umspritzen des Organoblechs (9) von dem Organoblech (9) entfernt wird.

8. Verfahren nach Anspruch 5,
**dadurch gekennzeichnet, dass** die Antihaftlage (12) während eines Umformens und Umspritzens des Organoblechs (9) in dem Formwerkzeug (15, 7, 8) verbleibt und nach dem Umformen und Umspritzen von dem Organoblech (9) entfernt wird.

9. Verfahren nach Anspruch 5,
**dadurch gekennzeichnet, dass** die Antihaftlage (12) während eines Umformens und Umspritzens des Organoblechs (9) in dem Formwerkzeug (15, 7, 8) verbleibt und bei einer Entnahme des Organoblechs (9) aus dem Formwerkzeug (15, 7, 8) zusammen mit dem Organoblech (9) entnommen wird und insbesondere als zusätzliche Oberflächenschicht auf dem Organoblech (9) verbleibt.

10. Verfahren nach einem der Ansprüche 5 bis 9,
**dadurch gekennzeichnet, dass** die Antihaftlage (12) mit einer Trägerbahn (16) verbunden in den Ofen (10) eingebracht wird und das erhitzte Organoblech (9) nach einem Lösen der Antihaftlage (12) von der Trägerbahn (16) zusammen mit der Antihaftlage (12) aus dem Ofen (10) entnommen wird.

11. Verfahren nach Anspruch 10,
**dadurch gekennzeichnet, dass** die Antihaftlage (12) von einem Abschnitt der Trägerbahn (16), insbesondere von einem mittels einer Perforation (19) von der Trägerbahn (16) konturdefiniert abtrennbaren Abschnitt gebildet wird.

12. Verfahren nach einem der Ansprüche 1 bis 11,
**dadurch gekennzeichnet, dass** die Antihaftlage (12) und/oder eine Trägerbahn (16), welche die Antihaftlage (12) aufweist, von einem Einzelbogen gebildet wird, der in den Ofen (10) eingelegt wird.

13. Verfahren nach einem der Ansprüche 1 bis 11,
**dadurch gekennzeichnet, dass** die Antihaftlage (12) und/oder eine Trägerbahn (16), welche die Antihaftlage (12) aufweist, von einem Abschnitt einer Endlosbahn (17) gebildet wird, der insbesondere von einem Wickel (18, 18a, 18b) abgewickelt und in eine im Ofen (10) angeordnete Auflegeposition gefördert wird.

14. Verfahren nach einem der Ansprüche 1 bis 13,
**dadurch gekennzeichnet, dass** die Antihaftlage (12) einseitig oder beidseitig des Organoblechs (9) angelegt wird.

15. Verfahren nach einem der Ansprüche 1 bis 14,
**gekennzeichnet durch** ein Aufbringen einer weiteren Antihaftlage (12) auf wenigstens einen Oberflächenabschnitt des Formwerkzeugs (15, 7, 8) oder eines das Organoblech (9) handhabenden Greifers (14), insbesondere eines Greifers (14) eines automatisierten Handhabungsgerätes (13).

## Claims

1. A process for producing plastic moulded pieces which include, in particular, at least one formed organic sheet (9) which is overmoulded with thermoplastic plastic, said method comprising the steps of:
- providing an organic sheet (9);
- providing an oven (10) for heating an organic sheet (9) placed in the oven (10);
- introducing an anti-adhesive layer (12) into the oven (10);
- introducing the provided organic sheet (9) into the oven (10);
- heating the organic sheet (9) in contact with the anti-adhesive layer (12) to a forming temperature;
- removing the heated organic sheet (9) from the oven (10) and transferring the heated organic sheet (9) to a mould (15, 7, 8);
- forming and overmoulding the organic sheet (9) in the mould (15, 7, 8).

2. **The process according to Claim 1,**
**characterized in that** the anti-adhesive layer (12) is introduced into the oven (10) as a separate anti-adhesive layer (12) before the introduction of the provided continuous fibre-reinforced thermoplastic sheet (9), and the continuous fibre-reinforced thermoplastic sheet (9) is subsequently placed onto the anti-adhesive layer (12).

3. The process according to Claim 1,
**characterized in that** the continuous fibre-reinforced thermoplastic sheet (9) is provided with an anti-adhesive layer (12) applied onto its surface, and the continuous fibre-reinforced thermoplastic sheet (9) is introduced into the oven (10) jointly together with the applied anti-adhesive layer (12).

4. The process according to one of Claims 1 to 3,
**characterized in that** the heated continuous fibre-reinforced thermoplastic sheet (9) is removed from the oven (10), leaving the anti-adhesive layer (12) in the oven (10).

5. The process according to one of Claims 1 to 3,
**characterized in that** the heated continuous fibre-reinforced thermoplastic sheet (9) is removed from the oven (10) together with the anti-adhesive layer (12).

6. The process according to Claim 5,
**characterized in that** the anti-adhesive layer (12) is removed from the continuous fibre-reinforced thermoplastic sheet (9) before, during or after a transfer of the continuous fibre-reinforced thermoplastic sheet (9) into the mould (15, 7, 8) and before a forming of the continuous fibre-reinforced thermoplastic sheet (9).

7. The process according to Claim 5,
**characterized in that** the anti-adhesive layer (12) remains in the mould (15, 7, 8) during a forming of the continuous fibre-reinforced thermoplastic sheet (9), and is removed from the continuous fibre-reinforced thermoplastic sheet (9) after the forming of the continuous fibre-reinforced thermoplastic sheet (9) and before an overmoulding of the continuous fibre-reinforced thermoplastic sheet (9).

8. The process according to Claim 5,
**characterized in that** the anti-adhesive layer (12) remains in the mould (15, 7, 8) during a forming and overmoulding of the continuous fibre-reinforced thermoplastic sheet (9), and is removed from the continuous fibre-reinforced thermoplastic sheet (9) after the forming and overmoulding.

9. The process according to Claim 5,
**characterized in that** the anti-adhesive layer (12) remains in the mould (15, 7, 8) during a forming and overmoulding of the continuous fibre-reinforced thermoplastic sheet (9), and on a removal of the continuous fibre-reinforced thermoplastic sheet (9) from the mould (15, 7, 8) is removed together with the continuous fibre-reinforced thermoplastic sheet (9) and in particular remains as an additional surface layer on the continuous fibre-reinforced thermoplastic sheet (9).

10. The process according to one of Claims 5 to 9, **characterized in that** the anti-adhesive layer (12) is introduced, connected with a carrier web (16), into the oven (10), and the heated continuous fibre-reinforced thermoplastic sheet (9), after a detaching of the anti-adhesive layer (12) from the carrier web (16), is removed from the oven (10) together with the anti-adhesive layer (12).

11. The process according to Claim 10,
**characterized in that** the anti-adhesive layer (12) is formed by a section of the carrier web (16), in particular by a section which is separable from the carrier web (16) in a contour-defined manner by means of a perforation (19).

12. The process according to one of Claims 1 to 11,
**characterized in that** the anti-adhesive layer (12) and/or a carrier web (16) which has the anti-adhesive layer (12) is formed by an individual sheet which is placed into the oven (10).

13. The process according to one of Claims 1 to 11,
**characterized in that** the anti-adhesive layer (12) and/or a carrier web (16) which has the anti-adhesive layer (12) is formed by a section of an endless web (17) which is unwound in particular from a spool (18, 18a, 18b) and conveyed into a placement position arranged in the oven (10).

14. The process according to one of Claims 1 to 13,
**characterized in that** the anti-adhesive layer (12) is applied on one side or on both sides of the continuous fibre-reinforced thermoplastic sheet (9).

15. The process according to one of Claims 1 to 14,
**characterized by** an application of a further anti-adhesive layer (12) onto at least one surface section of the mould (15, 7, 8) or of a gripper (14) handling the continuous fibre-reinforced thermoplastic sheet (9), in particular of a gripper (14) of an automated handling apparatus (13).

## Revendications

1. Procédé de fabrication de pièces moulées en plastique, en particulier présentant au moins une tôle organique formée (9) qui est couverte par extrusion avec du plastique thermoplastique, comprenant les étapes :
- de fourniture d'une tôle organique (9) ;
- de fourniture d'un four (10) pour chauffer une tôle organique (9) placée dans le four (10) ;
- d'introduction d'une couche anti-adhésive (12) dans le four (10) ;
- d'introduction de la tôle organique (9) fournie dans le four (10) ;
- de chauffage de la tôle organique (9) en contact avec la couche anti-adhésive (12) à une température de formage ;
- enlèvement de la tôle organique chauffée (9) hors du four (10) et transfert de la tôle organique chauffée (9) dans un outil de moulage (15, 7, 8) ;
- formage et recouvrement par extrusion de la tôle organique (9) dans l'outil de moulage (15, 7, 8).

2. Procédé selon la revendication 1,
**caractérisé en ce que** la couche anti-adhésive (12) est insérée en tant que couche anti-adhésive (12) séparée dans le four (10) avant l'introduction de la tôle organique chauffée (9), et la tôle organique (9) est ensuite placée sur la couche anti-adhésive (12).

3. Procédé selon la revendication 1,
**caractérisé en ce que** la tôle organique (9) est fournie avec une couche anti-adhésive (12) appliquée sur sa surface et la tôle organique (9) est placée conjointement avec la couche anti-adhésive (12) appliquée dans un four (10).

4. Procédé selon l'une des revendications 1 à 3,
**caractérisé en ce que** la tôle organique chauffée (9) est enlevée du four (10) en laissant la couche anti-adhésive (12) dans le four (10).

5. Procédé selon l'une des revendications 1 à 3,
**caractérisé en ce que** la tôle organique chauffée (9) est enlevée du four (10) conjointement avec la couche anti-adhésive (12).

6. Procédé selon la revendication 5,
**caractérisé en ce que** la couche anti-adhésive (12), avant, pendant ou après un passage de la tôle organique (9) dans l'outil de moulage (15, 7, 8) et avant un formage de la tôle organique (9) est éloignée de la tôle organique (9).

7. Procédé selon la revendication 5,
**caractérisé en ce que** la couche anti-adhésive (12) reste dans l'outil de moulage (15, 7, 8) pendant un formage de la tôle organique (9) et est enlevée de la tôle organique (9) après le formage de la tôle organique (9) et avant un recouvrement par extrusion de la tôle organique (9).

8. Procédé selon la revendication 5,
**caractérisé en ce que** la couche anti-adhésive (12) reste dans l'outil de moulage (15, 7, 8) pendant un formage et un recouvrement par extrusion de la tôle organique (9) et est enlevée de la tôle organique (9) après le formage et le recouvrement par extrusion de la tôle organique (9).

9. Procédé selon la revendication 5,
**caractérisé en ce que** la couche anti-adhésive (12) reste dans l'outil de moulage (15, 7, 8) pendant un formage et un recouvrement par extrusion de la tôle organique (9) et lorsque la tôle organique (9) est enlevée de l'outil de moulage (15, 7, 8), est enlevée conjointement avec la tôle organique (9) et reste en particulier en tant que couche surfacique supplémentaire sur la tôle organique (9).

10. Procédé selon l'une des revendications 5 à 9,
**caractérisé en ce que** la couche anti-adhésive (12) est insérée dans le four (10) liée à une bande porteuse (16) et la tôle organique chauffée (9) est enlevée du four (10) conjointement avec la couche anti-adhésive (12) après un détachement de la couche anti-adhésive (12) de la bande porteuse (16).

11. Procédé selon la revendication 10, **caractérisé en ce que** la couche anti-adhésive (12) est formée par un tronçon de la bande porteuse (16), en particulier par un tronçon pouvant être séparé avec un contour défini de la bande porteuse (16) au moyen d'une perforation (19).

12. Procédé selon l'une des revendications 1 à 11,
**caractérisé en ce que** la couche anti-adhésive (12) et/ou une couche porteuse (16) qui présente la couche anti-adhésive (12) est formée par un seul arc qui est placé dans le four (10).

13. Procédé selon l'une des revendications 1 à 11,
**caractérisé en ce que** la couche anti-adhésive (12) et/ou une couche porteuse (16) qui présente la couche anti-adhésive (12) est formée par un tronçon d'une bande sans fin (17) qui est en particulier déroulé d'un rouleau (18, 18a ,18b) et transporté dans une position de pose disposé dans le four (10).

14. Procédé selon l'une des revendications 1 à 13,
**caractérisé en ce que** la couche anti-adhésive (12) est placée d'un côté ou des deux côtés de la tôle organique (9).

15. Procédé selon l'une des revendications 1 à 14,
**caractérisé par** une application d'une couche anti-adhésive (12) supplémentaire sur au moins un tronçon surfacique de l'outil de moulage (15, 7, 8) ou d'un grappin (14) manipulant la tôle organique (9), en particulier d'un grappin (14) d'un appareil de manutention automatique (13).
